# EUROPEAN PATENT APPLICATION

(11) **EP 4 492 493 A1**
(43) Date of publication of application: **15.01.2025**
(21) Application number: 23792142.4
(22) Date of filing: 18.04.2023
(51) Int. Cl.: H01M 4/36, H01M 4/38, H01M 4/134, H01M 4/1395, H01M 10/052, H01M 4/02

(54) **NEGATIVE ELECTRODE MATERIAL, MANUFACTURING METHOD THEREFOR, NEGATIVE ELECTRODE INCLUDING SAME, AND LITHIUM SECONDARY BATTERY INCLUDING SAME NEGATIVE ELECTRODE**

(30) Priority: 18.04.2022 KR 20220047660
(71) Applicant: LG Chem, Ltd., Yeongdeungpo-gu Seoul 07336 (KR)
(72) Inventor: KIM, Kong Kyeom, Daejeon 34122 (KR); CHOI, Won Yeong, Daejeon 34122 (KR); KO, Sang Ho, Daejeon 34122 (KR); UH, Hyoun Soo, Daejeon 34122 (KR)
(74) Representative: Hoffmann Eitle
(86) International application number: PCT/KR2023/005220
(87) International publication number: WO 2023/204566

(57) **Abstract**

The present invention relates to a negative electrode material including an inorganic coating layer, a manufacturing method therefor, a negative electrode including the negative electrode material, and a lithium secondary battery including the negative electrode, and provides a negative electrode material, a manufacturing method therefor, a negative electrode including same, and a lithium secondary battery including the negative electrode, wherein the negative electrode comprises: a core including silicon oxide particles and at least one selected from lithium silicate, lithium disilicate, and lithium silicide; and an inorganic coating layer sheathing the core and including metal phosphate, a metal phosphate derivative, or a lithium oxide-non-metal phosphate complex.

## Description

### TECHNICAL FIELD

### Cross-reference to Related Applications

This application claims the benefit of Korean Patent Application No. 10-2022-0047660, filed on April 18, 2022, in the Korean Intellectual Property Office, the disclosure of which is incorporated herein in its entirety by reference.

### Technical Field

The present invention relates to a negative electrode material, a preparing method thereof, a negative electrode including the negative electrode material, and a lithium secondary battery including the negative electrode.

### BACKGROUND ART

Recently, as an application field of a lithium secondary battery has rapidly expanded not only to power supply for electronic apparatuses such as electrical, electronic, communication and computer devices, but also to power storage and supply for large-area apparatuses such as automobiles and power storage devices, there are increasing demands for a lithium secondary battery having high stability while having high capacity and high-power.

A lithium secondary battery is generally prepared by: preparing a positive electrode and a negative electrode by a process of applying a slurry, in which a positive electrode material capable of insertion and removal of lithium ions, a negative electrode material capable of intercalation and deintercalation of lithium ions, and optionally a binder and a conductive material are mixed, onto a positive electrode current collector and a negative electrode current collector, respectively, and removing a solvent by heat or the like; forming a predetermined-shaped electrode current collector by stacking the positive electrode and the negative electrode on both sides of a separator; and then inserting the electrode current collector and a non-aqueous electrolyte solution in a battery case.

A graphite-based negative electrode material, which is a representative negative electrode material, has excellent structural stability even when lithium is inserted and removed, and thus exhibits stable capacity retention characteristics even after long cycles. However, the low theoretical capacity (350 mAh/g for LiC₆) makes the graphite-based negative electrode material unsuitable as a high-capacity and high-power material, which is currently demanded. Accordingly, a silicon-based negative electrode material such as silicon or a silicon oxide is in a spotlight as a next generation negative electrode material of a lithium secondary battery due to its low reduction potential with lithium, abundant reserves, and at least about 10 times higher theoretical capacity (2700 ~ 4200 mAh/g for Li₄.₄Si) than graphite. Despite such advantages, however, there are problems in that the silicon-based negative electrode material consumes approximately 3 times more lithium compared to the graphite-based negative electrode material, and a large amount of lithium inserted into the negative electrode during initial charging fails to return to the positive electrode due to the volume expansion and surface side reaction during charge and discharge of the lithium secondary battery using the silicon-based negative electrode material, thereby causing the initial irreversible capacity to be increased.

In addition, to solve the initial efficiency deterioration caused by an irreversible reaction of Li ions in case of using silicon oxide (SiO_{X}) particles, various methods of improving the initial efficiency by doping with Mg or by prelithiation of silicon oxide particles with Li, are being attempted. However, when preparing a negative electrode material slurry through a water-based process using the method above, there are disadvantages in that a lithium compound formed inside the prelithiated silicon oxide particle reacts with H₂O to generate LiOH by-products, thereby leading to decrease in the viscosity of the slurry and generation of hydrogen, and thus the slurry has poor coating characteristics, resulting in decrease in an adhesion between the negative electrode material layer and the current collector.

Therefore, it is needed to develop a negative electrode material that has excellent initial capacity and capacity retention rate, does not have a large change in viscosity during preparation of a negative electrode material slurry through a water-based process, prevents hydrogen generation, and prevents volume expansion during charging and discharging in the negative electrode using the same.

### [Prior Art Document]

### [Patent Document]

(Korean Patent Document 1) KR10-2014-0091388A

### DISCLOSURE OF THE INVENTION

### TECHNICAL PROBLEM

The present invention has been made to solve the problems of the conventional art, and an objective of the present invention is to provide a negative electrode material, which is excellent in initial capacity and a capacity retention rate, and when preparing a negative electrode material slurry through a water-based process, there is little change in viscosity and hydrogen generation is suppressed.

In addition, another objective of the present invention is to provide a preparing method of the negative electrode material.

In addition, another objective of the present invention is to provide a negative electrode including the negative electrode material.

In addition, another objective of the present invention is to provide a lithium secondary battery including the negative electrode.

### TECHNICAL SOLUTION

In order to solve the above-described tasks, the present invention provides a negative electrode material, a preparing method thereof, a negative electrode including the negative electrode material, and a lithium secondary battery.
(1) The present invention provides a negative electrode material including: a core including a silicon oxide particle and at least one lithium-containing compound selected from among lithium silicate, lithium disilicate, and lithium silicide; and an inorganic coating layer surrounding the core, wherein the inorganic coating layer includes metal phosphate, a metal phosphate derivative, or a lithium oxide-non-metal phosphate composite, the metal phosphate is at least one selected from among Li₃PO₄, Li₄P₂O₇, Li₉Al₃(P₂O₇)₃(PO₄)₂, Co₃(P₄)₂, Co₃(PO₃)₂, GaPO₄, Ga(PO₃)₃, FePO₄, Fe(PO₃)₃, Mg₃(PO₄)₂, Mg(PO₃)₂, Ca₃(PO₄)₂, Ca(PO₃)₂, Be₃(PO₄)₂, Be(PO₃)₂, Pb₃(PO₄)₂, Pb(PO₃)₂, LaPO₄, La(PO₃)₃, YPO₄, Y(PO₃)₃, VOPO₄, Zr₃(PO₄)₂, Zr(PO₃)₂ and Al(PO₃)₃, and the metal phosphate derivative includes at least one selected from among a metal phosphate-derived unit, a boric acid-derived unit, and a lithium borate-derived unit.
(2) The present invention provides the negative electrode material of (1) above, wherein the silicon oxide particle includes a carbon coating layer on a surface thereof.
(3) The present invention provides the negative electrode material of (1) or (2) above, wherein the metal phosphate derivative is [M(HₙPO₄)ₘO-B(OH)₂], [(M(HₙPO₄)ₘO)₂-B(OH)] or [(M(HₙPO₄)ₘO)₃-B], where M is at least one selected from among Co, Ga, Fe, Mg, Ca, Be, Pb, La, Y, Zr and Al, n is 1 or 2, and m is 1, 2, or 3.
(4) The present invention provides the negative electrode material of (1) or (2) above, wherein the lithium oxide-non-metal phosphate composite is Li₂O-BPO₄.
(5) The present invention provides the negative electrode material of any one among (2) to (4) above, wherein the carbon coating layer has a thickness of 1 nm to 1 pm.
(6) The present invention provides the negative electrode material of any one among (1) to (5) above, wherein the inorganic coating layer has a thickness of 0.1 nm to 1 pm.
(7) The present invention provides the negative electrode material of any one among (1) to (6) above, wherein the coating layer further includes a cationic surfactant
(8) The present invention provides the negative electrode material of (7) above, wherein the cationic surfactant is cetrimonium bromide.
(9) The present invention provides a preparing method of any negative electrode material among (1) to (8) above, including: a step (S1) of forming core particles by mixing silicon oxide particles and lithium powder, and by performing a heat treatment; a step (S2) of reacting the core particles with a coating layer-forming composition; and a step (S3) of firing at 700 °C to 900 °C, wherein the coating layer-forming composition includes a metal phosphate precursor, includes at least one selected from among a metal phosphate precursor and lithium hydroxide, and boric acid and lithium borate, or includes non-metal phosphate, boric acid and lithium borate.
(10) The present invention provides the preparing method (9) above, wherein the reaction in the S2 step is performed by mechanical grinding of the core particles and the coating layer-forming composition without a solvent.
(11) The present invention provides the preparing method of (9) above, wherein the reaction in the S2 step is performed by mixing the core particles and the coating layer-forming composition in a solvent, and the coating layer-forming composition further includes at least one selected from among an organic solvent and a cationic surfactant.
(12) The present invention provides the preparing method of (9) to (11) above, wherein the metal phosphate precursor is at least one selected from the group consisting of Co(H₂PO₄)₂, Ga(H₂PO₄)₃, Fe(H₂PO₄)₃, Mg(H₂PO₄)₂, Ca(H₂PO₄)₂, Be(H₂PO₄)₂, Pb(H₂PO₄)₂, La(HPO₄)₃, VO(H₂PO₄)₂, Y₂(HPO4)₃, Zr(HPO₄)₂, and Al(H₂PO₄)₃.
(13) The present invention provides the preparing method of any one among (9) to (11) above, wherein the lithium hydroxide is LiOH.
(14) The present invention provides the preparing method of any one among (9) to (11) above, wherein the lithium borate is at least one selected from among Li₃BO₃ and Li₂B₄O₃.
(15) The present invention provides the preparing method of, which is any one selected from among (9) to (11) above, wherein the non-metal phosphate is NH₄H₂PO₄.
(16) The present invention provides a negative electrode including: a conductive metal current collector; and a negative electrode material layer provided on at least one surface of the current collector, wherein the negative electrode material layer includes any negative electrode material among (1) to (8) above, and the negative electrode material contains lithium ions dispersed by the prelithiation.
(17) The present invention provides a lithium secondary battery including: the negative electrode according to (16) above; a positive electrode; and a separator and an electrolyte disposed between the positive electrode and the negative electrode.

### ADVANTAGEOUS EFFECTS

A negative electrode material according to the present invention includes a core containing silicon oxide particles and a lithium-containing compound and an inorganic coating layer surrounding the core, and thus even when prepared as a water-based slurry, a decrease in viscosity of the slurry and hydrogen generation caused by a LiOH by-product are suppressed. Therefore, changes in viscosity are little and hydrogen generation is reduced while having excellent initial capacity and capacity retention rate compared to a water-based negative electrode material slurry containing typical silicon oxide particles, and thus there are advantages in that poor coating of slurry and deterioration of adhesion caused by the decrease in viscosity may be suppressed and storage stability is excellent.

In addition, a negative electrode according to the present invention includes a negative electrode material layer containing a prelithiated negative electrode material, resulting in excellent initial efficiency and suppression of volume expansion of the negative electrode, and thus a capacity retention rate and long-term stability may be excellent.

### BRIEF DESCRIPTION OF THE DRAWINGS

The following drawings attached to this specification illustrate specific embodiments of the present invention, and serve to help a further understanding of the technical spirit of the present invention along with the above-described contents of the invention. However, the present invention should not be construed as limited to the descriptions illustrated in the drawings.
FIG. 1 is a XRD pattern of a prelithiated Li-SiOₓ/C core particle prepared according to Example 2.
FIG. 2 is a XRD pattern of a non-prelithiated Li-SiOₓ/C core particle prepared according to Comparative Example 2.
FIG. 3 is a graph showing comparative analysis of capacity retention rates of a half-cell using a negative electrode material prepared according to Example 2 and a half cell using a negative electrode material according to Comparative Example 1.
FIG. 4 is a graph showing comparative analysis of capacity retention rates of a half-cell using a negative electrode material prepared according to Example 4 and a half cell using a negative electrode material according to Comparative Example 1.

### MODE FOR CARRYING OUT THE INVENTION

Hereinafter, the present invention will be described in more detail to help an understanding of the present invention.

It will be understood that terms or words used in the specification and claims should not be construed as being limited to the ordinary or dictionary meaning, and it should be interpreted as meaning and concept consistent with the technical idea of the present invention, based on the principle that an inventor may properly define the concept of the term to explain the invention in the best way.

### Negative electrode material

The present invention provides a silicon or silicon oxide-based negative electrode material including an inorganic coating layer on a surface.

A negative electrode material according to an embodiment of the present invention includes: a core containing a silicon oxide particle, and at least one lithium-containing compound selected from among lithium silicate, lithium disilicate and lithium silicide; and an inorganic coating layer surrounding the core, and it is characterized in that the inorganic coating layer includes metal phosphate, a metal phosphate derivative or a lithium oxide-non-metal-phosphate composite, the metal phosphate is at least one selected from among Li₃PO₄, Li₄P₂O₇, Li₉Al₃(P₂O₇)₃(PO₄)₂, Co₃(PO₄)₂, Co₃(PO₃)₂, GaPO₄, Ga(PO₃)₃, FePO₄, Fe(PO₃)₃, Mg₃(PO₄)₂, Mg(PO₃)₂, Ca₃(PO₄)₂, Ca(PO₃)₂, Be₃(PO₄)₂, Be(PO₃)₂, Pb₃(PO₄)₂, Pb(PO₃)₂, LaPO₄, La(PO₃)₃, YPO₄, Y(PO₃)₃, VOPO₄, Zr₃(PO₄)₂, Zr(PO₃)₂ and Al(PO₃)₃, and the metal phosphate derivative includes at least one selected from among a metal phosphate-derived unit, a boric acid-derived unit and lithium borate-derived unit.

As the negative electrode material, a graphite-based negative electrode material is known, the graphite-based negative electrode material has excellent structural stability even when lithium is inserted and removed, and thus exhibits stable capacity retention characteristics even after long cycles. However, the low theoretical capacity (350 mAh/g for LiC₆) makes the graphite-based negative electrode material unsuitable as a high capacity and high power material, which is currently demanded. Accordingly, silicon or a silicon oxide having at least about 10 times higher theoretical capacity (~ 4200 mAh/g for Li₄.₄Si) than graphite is in a spotlight. However, there are disadvantages in that the silicon-based negative electrode material consumes approximately 3 times more lithium compared to the graphite-based negative electrode material, and irreversible capacity increases. To solve initial efficiency deterioration caused by an irreversible reaction of lithium ions, a method of improving the initial efficiency by prelithiation with Li, is being attempted, but when preparing a water-based negative electrode material slurry using the prelithiated silicon-based negative electrode material, a lithium compound formed by prelithiation reacts with H₂O to produce a LiOH by-product, and hydrogen generation increases, thereby leading to changes in the viscosity of the slurry and poor coating characteristics of the slurry to cause serious defects in the slurry coating. As a result, fatal weakness, such as rapid capacity decrease caused by an electrical short-circuit with the current collector, may arise.

However, the negative electrode material according to the present invention has a structure in which an inorganic coating layer is included on a surface of the core containing prelithiated silicon oxide particles, and thus even though being prepared as the water-based negative electrode material slurry, the coating layer suppresses a decrease in the viscosity of the slurry and the hydrogen generation caused by a LiOH by-product, thereby preventing poor coating of the slurry and decrease in adhesion. Therefore, the integrity and the capacity retention rate of the negative electrode may be excellent.

Hereinafter, the negative electrode material according to the present invention will be specifically described.

The negative electrode material according to the present invention may include: a core containing a silicon oxide particle; and at least one selected from among lithium silicate, lithium disilicate, and lithium silicide; and an inorganic coating layer surrounding the core, and the inorganic coating layer may include metal phosphate, metal phosphate derivative or lithium oxide-non-metal phosphate composite.

The core includes a silicon oxide particle and lithium-containing compound.

Herein, the core is obtained by mixing the silicon oxide particles and lithium powder and then performing a heat treatment. That is, the core is formed by the prelithiation of the silicon oxide particle. The core includes the silicon oxide particle and at least one lithium-containing compound selected from among lithium silicate (Li₂SiO₃), lithium disilicate (Li₂Si₂O₅), and lithium silicide (LiₐSi, 0<a≤4.4), formed by the prelithiation of the silicon oxide particle.

The silicon oxide (SiOₓ, where x satisfies 0<x≤2) particle may have an amorphous structure, and the silicon oxide particle may have an average particle diameter (D₅₀) of 5 nm to 20 pm.

In addition, the silicon oxide particle includes a carbon coating layer on a surface, and in this case, the carbon coating layer may have a thickness of 1 nm to 1 pm, or 1 nm to 100 nm.

In addition, the negative electrode material may include an inorganic coating layer surrounding the core, and the inorganic coating layer may include metal phosphate, a metal phosphate derivative, or lithium oxide-non-metal phosphate composite.

In addition, the inorganic coating layer may have a thickness of 0.1 nm to 1 µm.

The metal phosphate may be at least one selected from among Li₃PO₄, Li₄P₂O₇, Li₉Al₃(P₂O₇)₃(PO₄)₂, Co₃(PO₄)₂, Co₃(PO₃)₂, GaPO₄, Ga(PO₃)₃, FePO₄, Fe(PO₃)₃, Mg₃(PO₄)₂, Mg(PO₃)₂, Ca₃(PO₄)₂, Ca(PO₃)₂, Be₃(PO₄)₂, Be(PO₃)₂, Pb₃(PO₄)₂, Pb(PO₃)₂, LaPO₄, La(PO₃)₃, YPO₄, Y(PO₃)₃, VOPO₄, Zr₃(PO₄)₂, Zr(PO₃)₂ and Al(PO₃)₃, and specifically, the metal phosphate may be at least one selected from among Co₃(PO₄)₂, Mg₃(PO₄)₂, and Al(PO₃)₃.

In addition, the metal phosphate derivative may be, for example, a condensation reactant of a metal phosphate precursor and boric acid, and specifically, the metal phosphate derivative may be [M(HₙPO₄)ₘO-B(OH)₂], [(M(HₙPO₄)ₘO)₂-B(OH)] or [(M(HₙPO₄)ₘO)₃-B], where M may be at least one selected from among Co, Ga, Fe, Mg, Ca, Be, Pb, La, Y, Zr, and Al, n is 1 or 2, and m is 1, 2, or 3.

For another example, the metal phosphate derivative may be a reaction product of the metal phosphate precursor, boric acid and lithium borate.

In addition, the lithium oxide-non-metal phosphate may be a reaction product of non-metal phosphate, boric acid and lithium borate, and specifically, Li₂O-BPO₄.

For another example, the coating layer may further include a cationic surfactant, and the cationic surfactant may be cetrimonium bromide.

### Preparation method of negative electrode material

The present invention provides a method of preparing a negative electrode material.

A method of preparing a negative electrode material according to an embodiment of the present invention may include: a step (S1) of forming a core particle by mixing silicon oxide particles and lithium powder and performing the heat treatment; a step (S2) of reacting of the core particle with a coating layer-forming composition; and a step (S3) of firing in a temperature range of 700 °C to 900 °C, and the coating layer-forming composition may include a metal phosphate precursor, include at least one selected from among the metal phosphate precursor and lithium hydroxide, boric acid and lithium borate, or include non-metal phosphate, boric acid, and lithium borate.

Hereinafter, the method of preparing the negative electrode material according to an embodiment of the present invention, will be divided into steps and more specifically described.

### (S1) step

The step (S1) is for preparing a prelithiated core particle, and may be performed by mixing the silicon oxide particles and the lithium powder and performing a heat treatment.

Herein, the silicon oxide particles are the same as described above.

In addition, the silicon oxide particles may include a carbon coating layer on a surface, and in this case, the carbon coating layer may be formed by carbonizing a carbon precursor by performing a heat treatment on the surface of the silicon oxide particles.

In this case, any common carbonization method known in the art may be used as the carbonization method. For example, both a dry or wet mixing may be used and a deposition method such as a chemical vapor deposition (CVD) method may be used by using, as a carbon precursor, a gas containing carbon, such as methane, ethane, propane, acetylene, ethylene, or the like, or by vaporizing a carbon precursor such as toluene, which is liquid at room temperature. In addition, examples of an amorphous carbon precursor may include: resins such as phenol resin, naphthalene resin, polyvinyl alcohol resin, urethane resin, polyimide resin, furan resin, cellulose resin, epoxy resin, polystyrene resin; coal-based pitch; petroleum-based pitch; tar; heavy oil having a low molecular weight; etc. Additionally, sucrose may also be used.

In addition, the mixing of the silicon oxide particles and the lithium powder is not particularly limited as long as mixed uniformly, and may be performed through a typical powder mixing method in the art. In this case, the lithium powder may be mixed in an amount of 1 part by weight to 15 parts by weight, specifically, 3 parts by weight to 10 parts by weight or 5 parts by weight to 10 parts by weight with respect to 100 parts by weight of the silicon oxide particles. In this case, the initial efficiency increase due to prelithiation of silicon oxide may be sufficiently secured, and at the same time, the decrease in capacity, which is a trade-off relationship therewith, may be small.

In addition, the heat treatment may be performed in a temperature range of less than 1000 °C, or specifically 900 °C or less, or 500 °C to 1000 °C, 600 °C to 1000 °C, 500 °C to 900 °C, or 600 °C to 900 °C. When the heat treatment temperature is over 1000 °C, a Si crystal of the silicon oxide particle tends to increase, leading to having a disadvantage in that the volume expansion fails to be controlled during intercalation and deintercalation of lithium.

### (S2) step

The step (2) is for applying (coating) a coating layer-forming composition on the surface of the core particle and may be performed by reacting the core particles prepared in the (S1) step with the coating layer-forming composition. In this case, the reaction may be performed by a wet coating or a dry coating.

Specifically, the reaction between the core particles and the coating layer-forming composition may be performed by mechanical grinding of the core particles and the coating layer-forming composition without a solvent. In this case, the coating layer may be formed by sufficient contact between reactants in a solid phase in an absence of the solvent.

For another example, the reaction between the core particles and the coating layer-forming composition may be performed by mixing the core particles and the coating layer-forming composition, and in this case, the coating layer-forming composition may further include at least one selected from among an organic solvent and a cationic surfactant.

The coating layer-forming composition may include a metal phosphate precursor, include at least one selected from among a metal phosphate precursor and lithium hydroxide, and boric acid and lithium borate, or include non-metal phosphate, boric acid, and lithium borate.

The metal phosphate precursor may be at least one selected from the group consisting of Co(H₂PO₄)₂, Ga(H₂PO₄)₃, Fe(H₂PO₄)₃, Mg(H₂PO₄)₂, Ca(H₂PO₄)₂, Be(H₂PO₄)₂, Pb(H₂PO₄)₂, La(HPO₄)₃, VO(H₂PO₄)₂, Y₂(HPO₄)₃, Zr(HPO₄)₂, and Al(H₂PO₄)₃, and specifically, at least one selected from the group consisting of Co(H₂PO₄)₂, Mg(H₂PO₄)₂, and Al(H₂PO₄)₃.

In addition, the lithium hydroxide may be LiOH.

In addition, the lithium borate may be at least one selected from among Li₃BO₃ and Li₂B₄O₇.

In addition, the non-metal phosphate may be NH₄H₂PO₄.

Meanwhile, in the reaction of the core particles with the coating layer-forming composition for applying (coating) the coating layer-forming composition onto the surface of the core particle, the coating layer-forming composition may be used in an amount such that an active ingredient in the coating layer-forming composition is 0.1 part by weight to 20.0 parts by weight, or 0.1 part by weight to 10.0 parts by weight with respect to 100 parts by weight of the core particles. In this case, while suppression effect of gas generation in the water-based slurry is excellent by forming the coating layer, reduction in capacity and efficiency due to the weight (or thickness) of the coating layer may be minimized.

Herein, the active ingredient includes at least one selected from among: a metal phosphate precursor; at least one selected from among a metal phosphate precursor and lithium hydroxide, and boric acid and lithium borate; or non-metal phosphate, boric acid, and lithium borate.

### (S3)step

The (S3) step is for preparing a negative electrode material, in which an inorganic coating layer is formed by a heat treatment, and may be performed by firing the negative electrode material coated with the coating layer-forming composition on the surface of the core particle in a temperature range of 700 °C to 900 °C.

Meanwhile, in the method of preparing a negative electrode material according to an embodiment of the present invention, a coating layer-forming composition is coated on the surface of the core particle and then fired at a high temperature within the above range to form an inorganic coating layer while a polycondensation reaction occurs, and thus hydrogen generation may be effectively suppressed during the preparation of the negative electrode material slurry through this water-based process.

Specifically, the firing may be carried out in an inert gas atmosphere in a temperature range of 700 °C to 900 °C for 1 hour to 6 hours, and in this case, more sufficient polycondensation reaction may occur to form an inorganic coating layer having a more excellent suppression effect of hydrogen generation.

### Negative electrode

The present invention provides a method of preparing a negative electrode including the negative electrode material.

The negative electrode according to an embodiment of the present invention may include a conductive metal current collector; and a negative electrode material layer provided on the at least one surface of the current collector, the negative electrode material layer may include the negative electrode material, and the negative electrode material may contain lithium ions dispersed by the prelithiation.

The negative electrode according to the present invention may include a negative electrode material layer containing the prelithiated silicon or silicon-based negative electrode material, thereby leading to excellent initial efficiency and suppression of volume expansion, and thus a capacity retention rate and long-stability may be excellent.

The conductive metal current collector may include a metal having high conductivity, and herein, the conductive metal current collector is not particularly limited as long as it is non-reactive in a voltage range of the battery. For example, stainless steel, aluminum, copper, nickel, titanium, calcined carbon, or aluminum or stainless steel surface-treated with carbon, nickel, titanium, silver, etc., may be used. In addition, the current collector may have a thickness of 3 µm to 500 pm.

Meanwhile, the negative electrode is prepared by: preparing a negative electrode material slurry by mixing a water-based solvent, the negative electrode material, and a binder and a conductive material; and applying the negative electrode material slurry onto at least one surface of the conductive metal current collector and drying. Herein, the water-based solvent may be water.

In addition, any conductive material may be included without particular limitation, as long as having conductivity without causing a chemical change in the battery, specific examples of the conductive material may include graphite such as natural graphite or artificial graphite; carbon-based materials such as carbon black, acetylene black, ketjen black, channel black, furnace black, lamp black, summer black, and carbon fiber; powders or fibers of metal such as copper, nickel, aluminum, or silver; conductive tubes such as carbon nanotubes; conductive whiskers such as a zinc oxide whisker or a potassium titanite whisker; conductive metal oxides such as titanium oxide; conductive polymers such as polyphenylene derivative; etc., and any one thereof or a mixture of two or more thereof may be used.

In addition, the binder may be commonly included in an amount of 0.1 wt% to 10 wt% with respect to the total weight of the negative electrode material layer, and examples of the binder may include polyacrylic acid (PAA), polyvinylidene fluoride (PVDF), polyvinyl alcohol, carboxymethyl cellulose (CMC), starch, hydroxypropyl cellulose, regenerated cellulose, polyvinylpyrrolidone, poly tetrafluoroethylene, polyethylene, polypropylene, ethylene-propylene-diene polymer (EPDM), sulfonated-EPDM, styrene-butadiene rubber, nitrile-butadiene rubber, fluororubber, various copolymers thereof, etc.

### Lithium secondary battery

The present invention provides a lithium secondary battery including the negative electrode.

According to an embodiment of the present invention, the lithium secondary battery may include the negative electrode; a positive electrode; and a separator and an electrolyte disposed between the positive electrode and the negative electrode. In addition, the lithium secondary battery may further optionally include: a battery case accommodating a battery assembly of the negative electrode, the positive electrode, and the separator; and a sealing member sealing the battery case.

According to an embodiment of the present invention, the positive electrode may include a positive electrode current collector and a positive electrode material layer disposed on the positive electrode current collector.

According to an embodiment of the present invention, the positive electrode current collector is not particularly limited as long as having conductivity without causing a chemical change in the battery, and for example, copper, stainless steel, aluminum, nickel, titanium, calcined carbon, copper or stainless steel surface-treated with carbon, nickel, titanium, silver, etc., aluminum-cadmium alloy, or the like may be used. In addition, the positive electrode current collector may commonly have a thickness of 3 µm to 500 pm, and fine irregularities are formed on the surface thereof to improve the adhesion of the positive electrode material. For example, the positive electrode current collector may be used in various forms such as films, foils, nets, porous bodies, foams, non-woven fabrics.

According to an embodiment of the present invention, the positive electrode material layer may optionally include a binder and a conductive material along with the positive electrode material.

According to an embodiment of the present invention, the positive electrode material may be at least one selected from the group consisting of LiCoO₂, LiCoPO₄, LiNiO₂, LiₓNiₐCo_{b}M¹_{c}M²_{d}O₂ (M¹ and M² are each independently at least one selected from the group consisting of Al, Mn, Cu, Fe, V, Cr, Mo, Ga, B, W, Mo, Nb, Mg, Hf, Ta, La, Ti, Sr, Ba, Ce, F, P, S and Y, 0.9≤x≤1.1, 0<a<1.0, 0<b<1.0, 0≤c<0.5, 0≤d<0.5, and a+b+c+d=1 are satisfied.), LiMnO₂, LiMnO₃, LiMn₂O₃, LiMn₂O₄, LiMn₂₋ₑM³ₑO₂ (M³ is at least one selected from the group consisting of Co, Ni, Fe, Cr, Zn and Ta, and 0.01≤e≤0.1 are satisfied.), Li₂Mn₃M⁴O₈ (M⁴ is at least one selected from the group consisting of Ci, Ni, Fe, Cu and Zn.), LiFePO₄, Li₂CuO₂, LiV₃O₈, V₂O₅, Cu₂V₂O₇, and a lithium metal.

According to an embodiment of the present invention, the binder is an ingredient helping a bonding between the conductive material, the positive electrode material and the current collector, and typically is added in an amount of 0.1 wt% to 10 wt% with respect to the total weight of the positive electrode material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene-butadiene rubber, nitrile-butadiene rubber, fluororubber, various copolymers thereof, and the like.

According to an embodiment of the present invention, the conductive material of the positive electrode material layer is an ingredient for further improving conductivity of the positive electrode material, and may be added in an amount of less than 10 wt%, and preferably, less than 5 wt% with respect to the total weight of the positive electrode material layer. The conductive material is not particularly limited as long as having conductivity without causing a chemical change in the battery, and for example, graphite such as natural graphite or artificial graphite; carbon black such as acetylene black, ketjen black, channel black, furnace black, lamp black, and summer black; conductive fibers such as a carbon fiber and a metal fiber; fluorinated carbon; metal powders such as aluminum powder and nickel powder; conductive whiskers such as zinc oxide whiskers and potassium titanite whiskers; conductive metal oxides such as titanium oxide; conductive materials such as polyphenylene derivatives.

According to an embodiment of the present invention, the positive electrode may be prepared by applying the positive electrode material layer-forming slurry, which is prepared by dissolving or by dispersing of the positive electrode material and optionally a binder and a conductive material in a solvent, onto the positive electrode current collector and drying, or may be prepared by casting the positive electrode material layer-forming slurry onto an additional support, and then laminating a film obtained by peeling from the support on the positive electrode current collector.

According to an embodiment of the present invention, the separator separates the negative electrode and the positive electrode, and provides a movement pathway of lithium ions. Any separator typically used in a lithium secondary battery as a separator may be used without particular limitation, and particularly, a separator having excellent moisture-retention ability for an electrolyte as well as low resistance to a movement of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. In addition, a coated separator including a ceramic component, or a polymer material may be used to secure heat resistance or mechanical strength, and the separator having a single layer or multilayer structure may be optionally used.

According to an embodiment of the present invention, examples of the electrolyte may include an organic-based liquid electrolyte, an inorganic-based liquid electrolyte, a solid polymer electrolyte, a gel-type polymer electrolyte, a solid inorganic electrolyte, or a molten-type inorganic electrolyte which may be used in preparation of a lithium secondary battery, but the electrolyte is not limited thereto. For specific example, the electrolyte may include an organic electrolyte and a lithium salt.

According to an embodiment of the present invention, any organic solvent that may serve as a medium for movement of ions involved in the electrochemical reaction of the battery may be used as the organic solvent without particular limitation. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms and may include a double-bond aromatic ring or ether bond); amides such as dimethylformamide; dioxolanes such as 1,3-dioxolane; or sulfolanes may be used as the organic solvent. Among them, the carbonate-based solvent is preferable, and cyclic carbonates (for example, ethylene carbonate or propylene carbonate, etc.) having high ion conductivity and high dielectric constant that may increase the charging and discharging performance of batteries, and a linear carbonate-based compound having low viscosity (for example, a mixture of ethyl methyl carbonate, dimethyl carbonate or diethyl carbonate) is more preferable.

According to an embodiment of the present invention, any compound capable of providing lithium ions used in the lithium secondary battery may be used without particular limitation as the lithium salt. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ , and (CF₃CF₂SO₂)₂N- , and the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like. It is preferable to use a lithium salt within a concentration range of 0.1 M to 2.0 M. When the concentration of the lithium salt falls within the above-mentioned range, the electrolyte has suitable conductivity and viscosity, thereby exhibiting an excellent performance of the electrolyte, and lithium ions may effectively move.

According to an embodiment of the present invention, for the purpose of improving a lifespan of the battery, preventing a decrease in the battery capacity, and improving the discharge capacity of the battery, the electrolyte may further include in addition to the components of the electrolyte: for example, at least one additive selected from the group consisting of vinylene carbonate (VC), vinyl ethylene carbonate (VEC), fluoro ethylene carbonate (FEC), propane sultone (PS), 1,3-propane sultone (1 ,3-propane sultone (PRS), ethylene sulfate (ESa), succinonitrile (SN), adiponitrile (AN), hexane tricarbonitrile (HTCN), γ-Butyrolactone (γ-butyrolactone), biphenyl (BP), cyclohexyl benzene (CHB), and tert-amyl benzene (TAB); a haloalkylene carbonate-based compound such as difluoro ethylene carbonate; or one or more additive such as pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N- substituted imidazolidine, ethylene glycol dialkyl ether, an ammonium salt, pyrrole, 2-methoxy ethanol or aluminum trichloride. In this case, the additives may be included in an amount of 0.1 wt% to 5 wt% with respect to the total weight of the electrolyte.

A lithium secondary battery including the negative electrode according to the present invention stably exhibits excellent capacity characteristics, output characteristics and lifespan characteristics, and thus is useful in a field of portable apparatuses such as mobile phones, laptop computers, digital cameras, and electric vehicles such as hybrid electric vehicles (HEVs), and electric vehicles (EVs).

An appearance of the lithium secondary battery according to the present invention is not particularly limited, but may be a cylindrical type using a can, a prismatic type, a pouch type, a coin type, or the like.

The lithium secondary battery according to the present invention may be used not only in a battery cell which is used as a power source of small apparatuses, but may also be used as a unit cell in a medium and large sized battery module including a plurality of battery cells.

Therefore, according to an embodiment of the present invention, provided are a battery module including the lithium secondary battery as a unit cell, and a battery pack including the same.

According to an embodiment of the present invention, the battery module or the battery pack may be used as a power source for at least one medium and large sized apparatus of a power tool; electric cars including an electric vehicle (EV), a hybrid electric vehicle, and a plug-in hybrid electric vehicle (PHEV); or a power storage system.

### Example

Hereinafter, examples of the present invention will be described in detail in such a manner that it may easily be carried out by a person with ordinary skill in the art to which the present invention pertains. However, the present invention may be embodied in many different forms and should not be construed as being limited to the examples set forth herein.

### Example 1

100 g of SiOₓ/C(0<x≤2) including a carbon coating layer having an average particle diameter of 6 pm, and 6 g of lithium powder were mixed, and the resultant mixture was subjected to a heat treatment at 750 °C for 2 hours to prepare Li-SiOₓ/C, which is a prelithiated core particle.

15 g of Al(H₂PO₄)₃, which is a metal phosphate precursor, 150 g of zirconia balls having a diameter of 1 mm were ground with a planetary ball mill at 500 rpm for 24 hours in 34 g of an acetone solvent to reduce a precursor particle size in a range of 50 nm to 500 nm.

15 g of the core particle, Li-SiOₓ/C, and 0.75 g of Al(H₂PO₄)₃ were input into a particle compounding equipment (NOB-MINI, Hosokawa) and operated at 5000 rpm for 15 minutes to prepare Li-SiOₓ/C coated with Al(H₂PO₄)₃ on the surface. Thereafter, Li-SiOₓ/C coated with Al(PO₃)₃ was prepared by sequentially performing heat treatments at 80 °C for 1 hour and 700 °C for 2 hours in a tube furnace in an argon atmosphere.

### Example 2

100 g of SiOₓ/C(0<x≤2) including a carbon coating layer having an average particle diameter (D₅₀) of 6 pm, and 6 g of lithium powder were mixed, and the resultant mixture was subjected to a heat treatment at 750 °C for 2 hours to prepare Li-SiOₓ/C, which is a prelithiated core particle.

15 g of Al(H₂PO₄)₃, which is a metal phosphate precursor, and 150 g of zirconia balls having a diameter of 1 mm were ground with a planetary ball mill at 500 rpm for 24 hours in 34 g of an acetone solvent to reduce the precursor particle size in a range from 50 nm to 500 nm.

5 g of the core particles Li-SiOₓ/C and 0.25 g of Al(H₂PO₄)₃ were mixed in 30 g of an ethanol solution containing 0.05 g of cetrimonium bromide (CTAB), which is a cationic surfactant, and ultrasonicated for 60 minutes to disperse. Thereafter, the solvent was evaporated while stirring at 300 rpm in a magnetic stirring equipment at 85 °C to prepare Li-SiOₓ/C coated with Al(H₂PO₄)₃ on the surface. Thereafter, Li-SiOₓ/C coated with Al(PO₃)₃ was prepared by sequentially performing heat treatments at 80 °C for 1 hour and 700 °C for 6 hours in a tube furnace in an argon atmosphere.

### Example 3

Li-SiOₓ/C coated with Al(PO₃)₃ was prepared in the same manner as in Example 2, except that 5 g of the core particles Li-SiOₓ/C(0<x≤2) and 0.10 g of Al(H₂PO₄)₃ were mixed in 30 g of an ethanol solution containing 0.05 g of cetrimonium bromide (CTAB), which is the cationic surfactant, in Example 2.

### Example 4

Li-SiOₓ/C coated with Li₉Al₃(P₂O₇)₃(PO₄)₂ was prepared in the same manner as in Example 2, except that, in 30 g of an ethanol solution containing 0.05 g of cetrimonium bromide (CTAB), 0.11 g of LiOH was additionally mixed along with 0.25 g of Al(H₂PO₄)₃ in Example 2.

### Example 5

Li-SiOₓ/C coated with Li₃PO₄ was prepared in the same manner as in Example 3, except that, in 30 g of an ethanol solution containing 0.05 g of cetrimonium bromide (CTAB), 0.11 g of LiOH was additionally mixed along with 0.10 g of Al(H₂PO₄)₃ in Example 3.

### Comparative Example 1

Li-SiOₓ/C(0<x≤2), which is the prelithiated core particle prepared according to Example 1, was used as a comparative negative electrode material.

### Comparative Example 2

SiOₓ/C coated with Al(PO₃)₃ was prepared in the same manner as in Example 2, except that 100 g of SiOₓ/C(0<x≤2), which is not prelithiated, has an average particle diameter (D₅₀) of 6 µm, and has a carbon coating layer on a surface, was used as a core particle in Example 2.

### Comparative Example 3

Li-SiOₓ/C coated with Al(PO₄) was prepared in the same manner as in Example 2, except that Al(PO₄) in place of Al(H₂PO₄)₃ was used, and a sequential heat treatment process at 700 °C for 6 hours was omitted in Example 2.

### Experimental Example 1

The Li-SiOₓ/C core particle of the negative electrode material, which was prepared according to Example 2 and coated with Al(PO₃)₃, was analyzed to determine if it was prelithiated and if there was an Al(PO₃)₃ coating layer on the surface.

### (1) Analysis of prelithiated Li-SiOₓ/C core particle

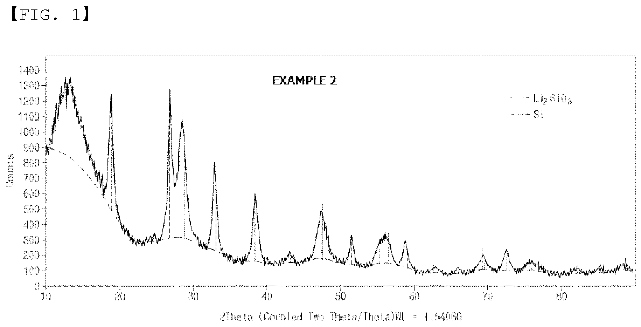

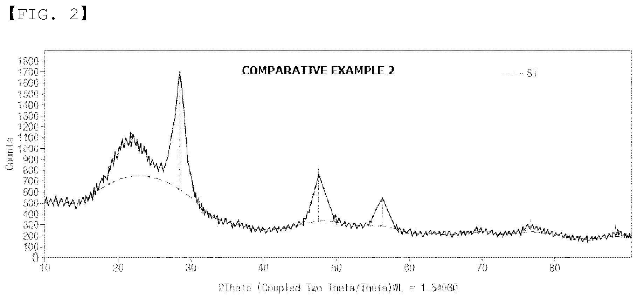

XRD (D8 ENDEAVOR, Bruker Co., λ = 1.5406 Å, 2θ = 10 °~90 °) analysis was performed for the prelithiated Li-SiOₓ/C core particles obtained according to Example 2. In this case, for comparison, the non-prelithiated SiOₓ/C core particle according to Comparative Example 2 was analyzed together, and the results are shown in FIGS. 1 and 2.

In the core particle according to Example 2, peaks of a lithium-containing compound such as Si and lithium silicate were observed (see FIG. 1). In the core particle according to Comparative Example 2, no peak corresponding to a lithium-containing compound was observed (see FIG. 2).

### (2) Coating layer analysis

XPS analysis (K-Alpha+, Thermo Fischer Scientific Inc., X -ray source: monochromatic Al Kalpha (1486.6 eV)) was performed in order to confirm an Al(PO₃)₃coating layer on the surface of Li-SiOₓ/C negative electrode material coated with Al(PO₃)₃ prepared according to Example 2.

In this case, for comparison, Li-SiOₓ/C according to Comparative Example 1 was analyzed with along Al(PO₃)₃ (Sigma Aldrich), and the results are listed in Table 1 below.

**[Table 1]**

| Classification | P | Al | Al/P |
|---|---|---|---|
| Example 2 | 2.6(±0.2)at% | 1.1(±0.0)at% | 0.41(±0.41)at% |
| Comparative Example 1 | Not detected | Not detected | - |
| Al(PO₃)₃ | 20.1(±0.0)at% | 7.4(±0.1)at% | 0.40(±0.0)at% |

With reference to Table 1, a Al/P ratio on the surface of the negative electrode material according to Example 2 was in the same level as that of Al(PO₃)₃, through which it was confirmed that an Al(PO₃)₃ coating layer was formed.

### Experimental Example 2

Negative electrode material slurries were prepared using the negative electrode materials according to Examples 1 to 5 and Comparative Examples 1 and 3, amounts of gas generated were measured, and the results are listed in Table 2 below.

Each negative electrode material was mixed with graphite in a weight ratio of 1:4 to obtain a mixed negative electrode material. The mixed negative electrode material, Super-C65, which is a conductive material, and carboxymethyl cellulose and a styrene-butadiene rubber binder, which were binders, were mixed at a ratio of 96.3:1.0:1.1:1.6 in a water solvent to prepare a negative electrode material slurry. Thereafter, the negative electrode material slurry was placed in an aluminum pouch, then sealed, and stored in an oven at 60 °C to measure changes in volume of the pouch over time, and a difference of the changes in the volume was divided by the weight of the negative electrode material used to calculate the amount of gas generated per mass of each negative electrode material.

**[Table 2]**

| Classification | 16 hours | 64 hours | 136 hours |
|---|---|---|---|
| Example 1 | 0 ml/g | 14 ml/g | 33 ml/g |
| Example 2 | 0 ml/g | 0 ml/g | 1 ml/g |
| Example 3 | 0 ml/g | 3 ml/g | 43 ml/g |
| Example 4 | 0 ml/g | 2 ml/g | 3 ml/g |
| Example 5 | 0 ml/g | 1 ml/g | 2 ml/g |
| Comparative Example 1 | 72 ml/g | 96 ml/g | > 100 ml/g |
| Comparative Example 3 | 33 ml/g | 45 ml/g | - |

As shown in Table 2, the negative electrode materials according to Examples 1 to 5 showed a significant decrease in the gas generation compared to the negative electrode material according to Comparative Example 1, and specifically, after storage for 16 hours, the negative electrode materials according to Examples 1 to 5 showed little gas generation, of which calculated value was 0 ml/g, and even after storage for 136 hours, almost no gas was generated at a level of 1 to 3 ml/g, or 33 or 43 ml/g, which was half the amount of the generated gas after storage for 16 hours of Comparative Example 1. Through this, it can be confirmed that the negative electrode material according to the present invention includes an inorganic coating layer, and thus hydrogen generation of the slurry due to a LiOH by-product may be suppressed even when prepared as a water-based negative electrode material slurry.

In addition, the negative electrode material according to Comparative Example 3 significantly increased in the gas generation after storage for 16 hours and 64 hours compared to the negative electrode materials according to Examples 1 to 5. In this case, the negative electrode material according to Comparative Example 3 was prepared by coating the core particle with metal phosphate without heat treatment. Through this, it was confirmed that even if there is the inorganic coating layer on the surface of the prelithiated silicon-based oxide core particle, in case of the coating layer obtained without undergoing a heat treatment, suppression effect of the gas generation was little or very poor.

### Experimental Example 3

Half-cells were prepared using the negative electrode materials according to Examples 1 to 5 and Comparative Examples 1 to 3, respectively, battery characteristics were measured, and the results are listed in Table 3 below.

Each of the negative electrode materials was mixed with Super-C65, which is a conductive material, and Li-PAA, which is a binder, in a weight ratio of 70:15:15 to prepare a negative electrode material slurry, then applied onto a copper foil, followed by drying, rolling, and punching processes to prepare a negative electrode.

Lithium metal was used as a counter electrode, a porous polyethylene separator was provided between the negative electrode and the lithium metal, and a coin half-cell was prepared by injecting an electrolyte in which 1 M of LiPF₆, 1.5 wt% of VC, and 0.5 wt% of PS were dissolved, in a solvent, in which ethylene carbonate (EC) and ethyl methyl carbonate (EMC) were mixed in a volume ratio of 30:70.

The coin half-cell was left for 24 hours, then in 0.005 V to 1.5 V vs Li/Li+ section, charged up to 0.005 V at a constant current (CC) of 0.1 C, then charged at a constant voltage (CV) until a charging current reached 0.02 C, and discharged at a constant current (CC) of 0.1 C, thereby measuring a charge/discharge capacity and initial efficiency of a first cycle.

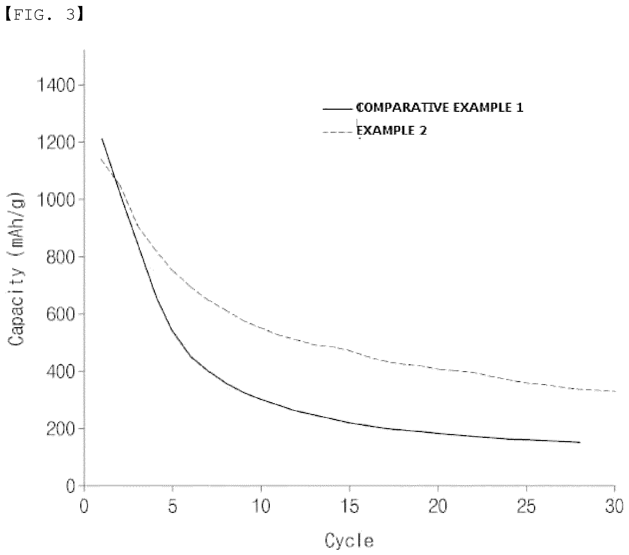

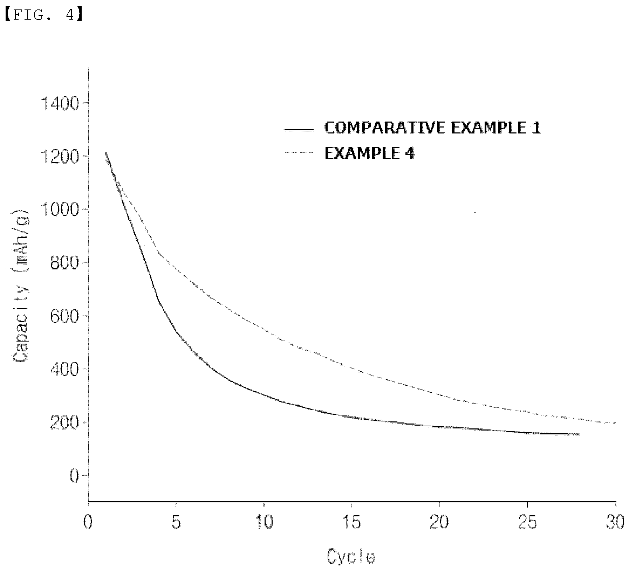

In addition, the charge and discharge capacities of Examples 2 and 4 and Comparative Example 1 were compared up to 30 cycles, and the results are shown in FIGS. 3 and 4.

**[Table 3]**

| Classification | Charge capacity (mAh/g) | Discharge capacity (mAh/g) | Initial Efficiency (%) |
|---|---|---|---|
| Example 1 | 1500 | 1160 | 77 |
| Example 2 | 1520 | 1160 | 76 |
| Example 3 | 1560 | 1270 | 81 |
| Example 4 | 1500 | 1240 | 83 |
| Example 5 | 1490 | 1240 | 83 |
| Comparative Example 1 | 1520 | 1250 | 82 |
| Comparative Example 2 | 2270 | 1650 | 73 |
| Comparative Example 3 | 1500 | 1140 | 76 |

With reference to Table 3, and FIGS. 3 and 4, it was confirmed that Examples 1 to 5 had the excellent initial efficiency and capacity retention rates.

In general, the silicon-based oxide negative electrode material has a high initial capacity, but there are disadvantages in that a large amount of lithium inserted into the negative electrode during initial charging may not return to the positive electrode due to the volume expansion and the side reaction of the surface during charging and discharging, resulting in increased initial irreversible capacity. This phenomenon can also be confirmed from the results of Comparative Example 2.

In addition, it can also be confirmed that the prelithiated silicon-based oxide negative electrode material has the disadvantage of a decrease in capacity due to the volume expansion during charging and discharging, and the capacity retention rate of Comparative Example 1 shown in FIGS. 3 and 4 is significantly lower than that of Comparative Example 2.

From the above results, it is confirmed that a negative electrode material according to the present invention includes a core including a silicon oxide particle and a lithium-containing compound, and an inorganic coating layer surrounding the core, leading to suppression of hydrogen generation, and thus has excellent initial capacity characteristics while having excellent capacity retention rate and storage stability.

## Claims

1. A negative electrode material comprising:
a core including a silicon oxide particle, and at least one lithium-containing compound selected from among lithium silicate, lithium disilicate, and lithium silicide; and
an inorganic coating layer surrounding the core,
wherein the inorganic coating layer includes metal phosphate, a metal phosphate derivative, or a lithium oxide-non-metal phosphate composite,
the metal phosphate is at least one selected from among Li₃PO₄, Li₄P₂O₇, Li₉Al₃(P₂O₇)₃(PO₄)₂, Co₃(PO₄)₂, Co₃(PO₃)₂, GaPO₄, Ga(PO₃)₃,FePO₄, Fe(PO₃)₃, Mg₃(PO₄)₂, Mg(PO₃)₂, Ca₃(PO₄)₂, Ca(PO₃)₂, Be₃(PO₄)₂, Be(PO₃)₂, Pb₃(PO₄)₂, Pb(PO₃)₂, LaPO₄, La(PO₃)₃, YPO₄, Y(PO₃)₃, VOPO₄, Zr₃(PO₄)₂, Zr(PO₃)₂ and Al(PO₃)₃, and
the metal phosphate derivative includes at least one selected from among a metal phosphate-derived unit, a boric acid-derived unit, and a lithium borate-derived unit.

2. The negative electrode material of claim 1,
wherein the silicon oxide particle comprises a carbon coating layer on a surface thereof.

3. The negative electrode material of claim 1,
wherein the metal phosphate derivative is [M(HₙPO₄)ₘO-B(OH)₂], [(M(HₙPO₄)ₘO)₂-B(OH)] or [(M(HₙPO₄)ₘO)₃-B], where M is at least one selected from among Co, Ga, Fe, Mg, Ca, Be, Pb, La, Y, Zr and Al, n is 1 or 2, and m is 1, 2, or 3.

4. The negative electrode material of claim 1,
wherein the lithium oxide-non-metal phosphate composite is Li₂O-BPO₄.

5. The negative electrode material of claim 2,
wherein the carbon coating layer has a thickness of 1 nm to 1 pm.

6. The negative electrode material of claim 1,
wherein the inorganic coating layer has a thickness of 0.1 nm to 1 pm.

7. The negative electrode material of claim 1,
wherein the coating layer further comprises a cationic surfactant.

8. The negative electrode material of claim 7,
wherein the cationic surfactant is cetrimonium bromide.

9. A preparing method of the negative electrode material of claim 1, comprising:
a step (S1) of forming core particles by mixing silicon oxide particles and lithium powder, and by performing a heat treatment;
a step (S2) of reacting the core particles with a coating layer-forming composition; and
a step (S3) of firing at 700 °C to 900 °C,
wherein the coating layer-forming composition includes a metal phosphate precursor, includes at least one selected from among a metal phosphate precursor and lithium hydroxide, and boric acid and lithium borate, or includes non-metal phosphate, boric acid and lithium borate.

10. The preparing method of claim 9,
wherein a reaction in the S2 step is performed by mechanical grinding the core particles and the coating layer-forming composition without a solvent.

11. The preparing method of claim 9,
wherein a reaction in the S2 step is performed by mixing the core particles and the coating layer-forming composition in a solvent, and
the coating layer-forming composition further includes at least one selected from among an organic solvent and a cationic surfactant.

12. The preparing method of claim 9,
wherein the metal phosphate precursor is at least one selected from the group consisting of Co(H₂PO₄)₂, Ga(H₂PO₄)₃, Fe(H₂PO₄)₃, Mg(H₂PO₄)₂, Ca(H₂PO₄)₂, Be(H₂PO₄)₂, Pb(H₂PO₄)₂, La(HPO₄)₃, VO(H₂PO₄)₂, Y₂(HPO₄)₃, Zr(HPO₄)₂ and Al(H₂PO₄)₃.

13. The preparing method of claim 9,
wherein the lithium hydroxide is LiOH.

14. The preparing method of claim 9,
wherein the lithium borate is at least one selected from among Li₃BO₃ and Li₂B₄O₇.

15. The preparing method of claim 9,
wherein the non-metal phosphate is NH₄H₂PO₄.

16. A negative electrode comprising:
a conductive metal current collector; and
a negative electrode material layer provided on at least one surface of the current collector,
wherein the negative electrode material layer includes the negative electrode material of claim 1.

17. A lithium secondary battery comprising:
the negative electrode according to claim 16;
a positive electrode;
a separator disposed between the positive electrode and the negative electrode; and
an electrolyte.
